(19)

**Europäisches Patentamt**
**European Patent Office**
**Office européen des brevets**

(11) **EP 3 970 871 A1**

(12) **EUROPEAN PATENT APPLICATION**
published in accordance with Art. 153(4) EPC

(43) Date of publication:
**23.03.2022 Bulletin 2022/12**

(21) Application number: **20805873.5**

(22) Date of filing: **20.02.2020**

(51) International Patent Classification (IPC):
**B09C 1/10** [(2006.01)]    **C08K 5/053** [(2006.01)]
**C08L 67/02** [(2006.01)]    **C08L 67/04** [(2006.01)]
**C08L 101/02** [(2006.01)]    **C08L 101/16** [(2006.01)]

(52) Cooperative Patent Classification (CPC):
**B09C 1/10; C02F 3/00; C08K 5/053; C08L 67/02;
C08L 67/04; C08L 101/02;** C08L 101/16

(86) International application number:
**PCT/JP2020/006723**

(87) International publication number:
**WO 2020/230395 (19.11.2020 Gazette 2020/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.05.2019 JP 2019092708**

(71) Applicant: **Toyo Seikan Group Holdings, Ltd.
Shinagawa-ku
Tokyo 141-8627 (JP)**

(72) Inventors:
• **SHIBATA, Kouki**
  **Yokohama-shi, Kanagawa 240-0062 (JP)**
• **KATAYAMA, Tsutaki**
  **Yokohama-shi, Kanagawa 240-0062 (JP)**
• **YOSHIKAWA, Seishi**
  **Yokohama-shi, Kanagawa 240-0062 (JP)**

(74) Representative: **J A Kemp LLP
80 Turnmill Street
London EC1M 5QU (GB)**

(54) **ORGANIC-SOLVENT DISPERSION OF HYDROLYZABLE POLYMER**

(57)    The present invention provides a high volume organic solvent polymer dispersion that is prepared by dispersing a hydrolysable polymer in a non-volatile water-soluble organic solvent, has a water content of not more than 1 mass%, and has a falling time at 50°C of not more than 120 seconds which is measured by a Zahn cup with an orifice diameter of not more than 5 mm.

**EP 3 970 871 A1**

**Description**

Technical Field:

The present invention relates to an organic solvent dispersion of a hydrolysable polymer. More specifically, the present invention relates to an organic solvent dispersion of a hydrolysable polymer that is consumed in a massive amount by being injected into the ground. In particular, the present invention also relates to a purifying agent suitable for use in the purification of contaminated groundwater.

Background Art:

Numerous measures have been considered and implemented to deal with groundwater pollution caused by chemical substances, some of which are regulated in line with environmental standards and the like. Among them, in-situ purification is particularly useful, which is a technique for purifying contaminated groundwater in situ without bringing a major change to the current status.

Known in-situ purification is a method in which toxic substances are decomposed with the use of microorganisms (bioremediation). This method purifies toxic chemical substances in groundwater by making effective use of in-situ microorganisms present in the soil where pollution occurs.

In the meantime, among the toxic chemical substances, volatile organic chlorine compounds (hereinafter, may be referred to as "VOCs") such as tetrachloroethylene and trichloroethylene are regulated in line with the environmental quality standards for groundwater pollution, and a technique for purifying these substances is in high demand. Further, nitrate nitrogen and nitrite nitrogen (hereinafter, may be referred to as "nitrate/nitrite nitrogen") are also regulated in line with the environmental quality standards for groundwater pollution, and there is a need for a technique for purifying these substances.

A known technique for purifying groundwater contaminated with VOCs and nitrate/nitrite nitrogen uses anaerobic microorganisms. This technique purifies VOCs and nitrate/nitrite nitrogen by making the groundwater environment anaerobic, and providing a hydrogen donor which serves as an energy source for anaerobic microorganisms to decompose VOCs and nitrate/nitrite nitrogen.

For example, when a water-soluble organic compound is injected into the ground as an energy source for anaerobic microorganisms, oxygen is consumed by aerobic microorganisms, so that an anaerobic environment is formed. As a result, anaerobic microorganisms are activated, and accordingly the purification of VOCs and nitrate/nitrite nitrogen proceeds. Here, the water-soluble organic compound refers to a substance that serves as a nutritive source or a hydrogen donor for activating aerobic microorganisms and anaerobic microorganisms.

In the ground where groundwater flow is rapid, the water-soluble organic compound is dissolved in water and easily flows out. This necessitates an additional injection of the water-soluble organic compound before purification is completed, which requires time, care and money. Further, even if the concentration of VOCs is decreased, VOCs contained in the surrounding soil may be eluted to cause pollution again. In such a case, if the water-soluble organic compound has disappeared, a sufficient anaerobic environment required for purification cannot be maintained, which makes it difficult for anaerobic microorganisms to purify VOCs, resulting in the recurrence (rebound) of groundwater pollution. On this account, a means is required to prevent the recurrence of groundwater pollution at a site where pollution may occur or a site where purification has been completed.

Various methods have been disclosed for purifying VOCs and nitrate/nitrite nitrogen with the use of anaerobic microorganisms.

For example, Patent Document 1 discloses a method for purifying the contaminated soil and/or contaminated groundwater in situ. In this method, a purifying agent having a melting point of 10°C to 40°C is heated to be melted, injected into the contaminated soil or groundwater under pressure to be diffused therein, and solidified, whereby microorganisms are proliferated under anaerobic conditions to achieve decomposition.

According to the in-situ purification method described in Patent Document 1, the purifying agent solidified in the soil allows the anaerobic environment to be sustained, which seems to prevent the recurrence of groundwater pollution. However, when the environment to be applied is low in temperature, the purifying agent is rapidly decreased in temperature and solidified. As a result, the purifying agent injected through an injection well is spread in a smaller area, and accordingly only a limited region in the soil can be purified.

In the method described in Patent Document 1, an organic compound (purifying agent) which serves as a nutritive source for anaerobic microorganisms is in a solid powder state when injected into the ground. The method allows the anaerobic environment to be sustained for a long term, is applicable to the ground with high permeability, and is effective in suppressing rebound after purification. In particular, in a case where a high molecular weight resin is used as the purifying agent, it is less likely to be deformed even in the ground, and allows gradual decomposition over time. As a result, the anaerobic environment can be sustained for a longer term.

In the implementation of the above-described method, the solid powder purifying agent to be injected preferably has a smaller particle shape so that it can be injected into a more widespread area of the ground. Meanwhile, an organic compound processed into fine powder has a larger surface area and, thus, is easily aggregated. Accordingly, it becomes difficult to be uniformly dispersed in water as a medium. In particular, in a case where a solid powder resin is used, such a resin is usually not dispersed in water only by being added thereto but is aggregated to be nonuniform or to float to the water surface, resulting in a significant decrease in handling.

Thus, there is a room for improvement in the state of the purifying agent to be used.

In order to improve the above-described problem, the present applicant et al. propose in Patent Document 2 a method for purifying contaminated groundwater. This method uses as a hydrogen donor a water-soluble organic compound in combination with a particulate hydrolysable resin. The hydrolysable resin particle is added to the water-soluble organic compound and is stirred, which is then mixed with water to prepare a mixed solution. The thus-obtained mixed solution is injected into the soil.

According to this method, the hydrolysable resin powder such as polylactic acid or polyoxalate is mixed with the water-soluble organic compound such as a carboxylate salt like sodium lactate or a carboxylic acid like lactic acid to form a paste. Upon purification, the paste is mixed with water and injected into the soil. The hydrolysable resin particle is hydrolyzed in the soil to serve as a hydrogen donor. Thus, the anaerobic environment can be maintained for a long term even in the ground with high permeability. Further, the use of the water-soluble organic compound allows the hydrolysable resin to be easily dispersed in water, ensuring handleability. In addition, the water-soluble organic compound also functions as a hydrogen donor, which allows the anaerobic environment to be formed even in a state where the hydrolysable resin particle is not hydrolyzed. As a result, it becomes possible to maintain the anaerobic environment for a longer term, and to effectively suppress rebound after purification.

However, the biggest drawback of the method of Patent Document 2 is that it is less industrially feasible, and no consideration is given to this issue in Patent Document 2.

More specifically, the paste of the hydrolysable resin particle and the water-soluble organic compound is very highly viscous and, thus, is difficult to produce with a large mixer for industrial use. For example, in the case of low volume production for laboratory use, mixing in a mortar as employed in Example of Patent Document 2 is applicable. However, in the case of producing a purifying agent that is fed underground for contaminated groundwater, the aforementioned mixing means cannot be employed because such an agent for this use is consumed in an enormous amount. In terms of industrial feasibility, mixing with a high volume mixer is indispensable. However, in a case where a high volume mixer is used for mixing, it is difficult to extract the paste from the mixer, and a large amount of the paste adheres to and is left on the wall surface of the mixer, resulting in a very low yield. In order to prevent the adhesion to the wall surface of the mixer, water may be added for viscosity control. However, the addition of water allows the hydrolysis of the hydrolysable resin to proceed soon after the paste control. As a result, most of the hydrolysable polymer has been hydrolyzed before it is actually injected into the ground. Consequently, it becomes impossible to maintain the anaerobic environment for a long term in the soil with high permeability.

Prior Art Documents:

Patent Documents:

   Patent Document 1: JP 3694294 B2
   Patent Document 2: JP 2018-143918 A

Summary of the Invention:

Problems to be solved by the invention:

Therefore, an object of the present invention is to provide a high volume organic solvent polymer dispersion suitable for mass consumption like a purifying agent for purifying contaminated groundwater.

Another object of the present invention is to provide a high volume organic solvent polymer dispersion particularly suitable as a purifying agent that is fed underground to purify contaminated groundwater.

Means for solving the problems:

The present invention provides a high volume organic solvent polymer dispersion that is prepared by dispersing a hydrolysable polymer in a non-volatile water-soluble organic solvent, has a water content of not more than 1 mass%, and has a falling time at 50°C of not more than 120 seconds which is measured by a Zahn cup with an orifice diameter of not more than 5 mm.

Further, the present invention provides a method of using a high volume organic solvent polymer dispersion including feeding the above-described high volume organic solvent polymer dispersion into the ground.

In the high volume organic solvent polymer dispersion of the present invention, the following embodiments are suitable:

(1) the high volume organic solvent polymer dispersion has a volume of not less than 1,000 L;
(2) the water-soluble organic solvent is a polyhydric alcohol;
(3) the hydrolysable polymer is an aliphatic polyester;
(4) the aliphatic polyester is polylactic acid or polyoxalate;
(5) a weight average molecular weight retention rate of the hydrolysable polymer left to stand at 50°C for 30 days is maintained at not less than 80%; and
(6) the high volume organic solvent polymer dispersion is fed into the ground to purify contaminated groundwater.

Effects of the invention:

The high volume organic solvent polymer dispersion of the present invention is prepared by dispersing a hydrolysable polymer in a water-soluble organic solvent, has a water content of not more than 30 mass%, and has a viscosity controlled such that the falling time at 50°C measured by a Zahn cup with an orifice diameter of not more than 5 mm is 120 seconds or less. Namely, even when this organic solvent polymer dispersion is produced in high volume (e.g., 1,000 L or more) by an industrial mixer, it can be extracted from the mixer easily, and is effectively suppressed from adhering to and being left on the wall surface of the mixer, resulting in a high yield. Therefore, the high volume organic solvent polymer dispersion of the present invention is available for mass consumption.

Further, according to the high volume organic solvent polymer dispersion of the present invention, a hydrolysate of the hydrolysable polymer and the water-soluble organic solvent function as a hydrogen donor that serves as a nutritive source for anaerobic microorganisms, thereby contributing to the formation of the anaerobic environment. As a result, it is possible to purify groundwater contaminated with volatile organic chlorine compounds (VOCs), nitrate nitrogen, nitrite nitrogen and the like.

Furthermore, the dispersion of the present invention contains an extremely limited amount of water, and the water-soluble organic solvent itself is significantly less likely to allow the hydrolysable polymer to be hydrolyzed. Thus, the hydrolysable polymer is effectively suppressed from being hydrolyzed before the dispersion is injected into the ground, e.g., when it is stored, transported or the like. Consequently, when the hydrolysable polymer is injected into the ground, it is not carried by flowing water or consumed in a short time as a nutritive source for microorganisms, but is hydrolyzed over time to be consumed as a nutritive source for microorganisms. Further, before the hydrolysate of the hydrolysable polymer is produced, the water-soluble organic solvent functions as a nutritive source for microorganisms. Thus, the underground environment can be kept anaerobic for a long term, and accordingly it becomes possible to purify contaminated groundwater and to effectively prevent the recurrence of groundwater pollution.

Further, the high volume organic solvent polymer dispersion is suitable for being consumed in a massive amount by being fed underground, and the polymer dispersed therein exhibits moderate hydrolyzability. Thus, this dispersion can also be suitably used to prepare, for example, a fracturing fluid (aqueous dispersion for drilling) for use in the mining of underground resources like shale gas.

Mode for Carrying Out the Invention:

The high volume organic solvent polymer dispersion of the present invention is prepared by dispersing a hydrolysable polymer in a water-soluble organic solvent so as to allow a hydrolysate of the hydrolysable polymer and the organic solvent to contribute to the formation of the anaerobic environment in the ground. Further, when the present invention is applied to the preparation of a fracturing fluid, the hydrolysable polymer functions as a filler to temporality seal cracks on a well.

Hydrolysable polymer:
The hydrolysable polymer used in the present invention is a water-insoluble resin that is hydrolyzed to a low molecular weight monomer in the presence of water. For example, an aqueous dispersion containing this resin in a concentration of 5 mg/ml is prepared and left to stand still at 25°C. After a lapse of certain days, 20 mL of this dispersion is extracted and filtered through a 0.45 μm filter. The amount of total organic carbon (TOC) measured by a total organic carbon meter (TOC meter) is not less than 0.5 ppm/day for 30 days or longer. Such a hydrolysable polymer can be injected even into the soil with high permeability without being carried by flowing water, and is gradually hydrolyzed in the soil to produce a hydrolysate, which serves as a hydrogen donor to function as a nutritive source for aerobic microorganisms.

Consequently, aerobic microorganisms are activated, allowing the underground environment to be anaerobic. As a result, anaerobic microorganisms are activated to decompose contaminants such as volatile organic chlorine compounds (VOCs), nitrate nitrogen and nitrite nitrogen. Further, the hydrogen donor, i.e., the hydrolysate also has a property of decomposing VOCs by reacting with and capturing a chlorine atom possessed by the VOCs.

Typical examples of the hydrolysable polymer as described above include hydrolysable resins such as polyester and polyamide, polysaccharides, and proteins, though the present invention is not limited thereto.

The polyester is basically a polycondensation product of a polycarboxylic acid and a polyhydric alcohol.

Typical examples of the polycarboxylic acid include dicarboxylic acids such as oxalic acid, malonic acid, succinic acid, glutaric acid, adipic acid, pimelic acid, suberic acid, azelaic acid, sebacic acid, phthalic acid, isophthalic acid, terephthalic acid, decanedicarboxylic acid, and cyclohexanedicarboxylic acid.

Examples of the polyhydric alcohol include ethylene glycol, propylene glycol, butanediol, octanediol, dodecanediol, neopentyl glycol, glycerin, pentaerythritol, sorbitan, bisphenol A, and polyethylene glycol.

The polyester may be obtained by the polycondensation of a hydroxycarboxylic acid or the ring-opening polymerization of a lactone or the like.

Examples of the hydroxycarboxylic acid include glycolic acid, lactic acid, malic acid, hydroxypropionic acid, hydroxybutyric acid, hydroxyvaleric acid, hydroxycaproic acid, and hydroxybeozoic acid. Examples of the lactone include glycolide, caprolactone, butyrolactone, valerolactone, propiolactone, and undecalactone.

The polyamide is a polycondensation product of a polycarboxylic acid and a polyamine or is obtained by the ring-opening polymerization of a lactam.

Typical examples of the polycarboxylic acid include dicarboxylic acids such as succinic acid, adipic acid, sebacic acid, glutaric acid, decanedicarboxylic acid, cyclohexanedicarboxylic acid, terephthalic acid, isophthalic acid, and anthracenedicarboxilic acid.

Examples of the polyamine include diamines such as hexamethylenediamine, nonanediamine, methylpentadiamine, and phenylenedimine.

Examples of the lactam include caprolactam, undecanelactam, and lauryllactam.

Examples of the polysaccharides and proteins include starch, modified starch, cellulose, chitin, chitosan, gluten, gelatin, soy protein, collagen, and keratin.

In the present invention, each of the above-described hydrolysable polymers may be used alone or in combination with one or more of the other hydrolysable polymers.

Among the above-described hydrolysable polymers, aliphatic polyesters are suitable from the view point of moderate hydrolyzability. For example, poly($\alpha$-hydroxy acid), poly(B-hydroxyalkanoate), poly($\omega$-hydroxyalkanoate), poly-alkylene dicarboxylate and the like are preferable. In particular, polyglycolic acid, polylactic acid, poly(B-hydroxybutyric acid), poly(B-hydroxyvaleric acid), poly-ß-propiolactone, poly-$\varepsilon$-caprolactone, polyethylene succinate, polybutylene succinate, polyethylene oxalate, polybutylene oxalate and the like are suitable. Above all, polylactic acid and polyoxalate are most suitable.

Polylactic acid is hydrolyzed to form lactic acid, which is particularly useful as a nutritive source and a hydrogen donor for microorganisms.

Polyoxalate, which is typically polyethylene oxalate or polybutylene oxalate, is a polymer obtained by the polycondensation of an oxalic acid and a diol such as ethylene glycol or butylene glycol, and has an extremely high hydrolysis rate as compared with polylactic acid.

Thus, depending on the type of the soil in which contaminated groundwater is present, the degree of pollution, the type of contaminants, and the like, either polylactic acid or polyoxalate may be selected for use as the hydrolysable polymer, so that the properties of each of these polymers can be optimized.

Further, in a case where polylactic acid and polyoxalate are used in combination, the anaerobic environment can be formed by the hydrolysis of polyoxalate during an early stage. Thereafter, when most of the polyoxalate is hydrolyzed, the hydrolysis of polylactic acid can then form the anaerobic environment. As a result, the anaerobic environment can be formed stably for a long term. Further, polylactic acid has a higher hydrolysis rate when used in combination with polyoxalate, because polyoxalate is hydrolyzed to form an acid (oxalic acid) that accelerates the hydrolysis of polylactic acid.

In light of the above, it is preferable in the present invention to use polylactic acid and polyoxalate in combination. For example, it is most suitable to use polyoxalate in an amount of 1 to 30 parts by mass per 100 parts by mass of polylactic acid.

Further, it is preferable in the present invention to use the hydrolysable polymer in the form of a granular substance. For example, the granular substance preferably has an average particle diameter $D_{50}$ in a range of 1 to 100 $\mu$m, which is measured in terms of volume by a laser diffraction scattering method. When injected into the soil, a hydrolysable polymer particle having an appropriate particle diameter tends to remain in the same place, because it is less likely to be carried even by fast flowing groundwater, and easily penetrates into a space between soil particles in the ground. As a result, the hydrolysable polymer particle is gradually hydrolyzed on the spot, contributing to the formation of the anaerobic environment. Further, even if groundwater contains oxygen, nitrate ion, sulfate ion and the like, they just have a limited effect, such as decreased hydrolyzability caused by oxidation and the like, on the surface of the particle, while the inside of the particle can be effectively free from such an adverse effect.

Such a granular substance of the hydrolysable polymer can be obtained by producing a hydrolysable polymer by, for example, emulsion polymerization or suspension polymerization, or alternatively by subjecting a hydrolysable resin pellet or the like obtained by melt extrusion to mechanical crushing, followed by appropriate sieve classification or the like.

Further, the hydrolysable polymer used in the present invention suitably has a weight average molecular weight (Mw) of not less than 12,000, particularly not less than 20,000. When the weight average molecular weight is too low, the hydrolysable polymer is entirely hydrolyzed and disappears in a short time, which is unfavorable for the anaerobic environment to be maintained for a long term. Also, such a low weight average molecular weight hydrolysable polymer tends to be unfavorable in light of granulation by mechanical crushing.

The weight average molecular weight (Mw) is measured by GPC in terms of polystyrene as a standard substance.

Water-soluble organic solvent:

The water-soluble organic solvent used in the present invention itself is a hydrogen donor, which serves as a nutritive source for aerobic microorganisms and anaerobic microorganisms to contribute to the formation of the anaerobic environment. Thus, the organic solvent needs to be a non-volatile liquid with a boiling point of higher than 100°C, for example. In the case of a volatile liquid such as methanol or ethanol, it is easily volatilized without contributing to the formation of the anaerobic environment. In addition, such a volatile liquid is unsuitable for long-term storage in the form of a dispersion before being injected into the soil, because the organic solvent is volatilized from the system.

Further, the organic solvent of the present invention has a high affinity for the hydrolysable polymer so as to allow particles of the hydrolysable polymer to be uniformly dispersed, and is soluble in water to easily penetrate into groundwater. In the case of a water-insoluble organic solvent (with a solubility in water of not more than 1 g/100 mL, for example), it is less likely to penetrate into the ground and, thus, cannot contribute to the formation of the anaerobic environment.

Furthermore, the water-soluble organic solvent of the present invention needs to be capable of maintaining the water content of the polymer dispersion at not higher than 30 mass%, preferably not higher than 10 mass%, and more preferably not higher than 1 mass%. When the water content is higher, the hydrolysis of the hydrolysable polymer dispersed in the organic solvent proceeds . As a result, most of the hydrolysable polymer has already been hydrolyzed and disappeared before it is injected into the ground. For the same reason, it is impossible to use, as the solvent of the present invention, a low carbon primary alcohol such as ethanol or methanol, or its anhydride even if it is capable of maintaining the water content at the suitable range, because such an alcohol itself is likely to allow the hydrolysable polymer to be hydrolyzed.

In the present invention, the water-soluble organic solvent is mixed with the hydrolysable polymer particle so that the hydrolysable polymer in the form of a granular substance is dispersed. The thus-obtained dispersion needs to have a viscosity (50 °C) such that the falling time measured by a Zahn cup with an orifice diameter of not more than 5 mm is 180 seconds or less, particularly 120 seconds or less. When the viscosity is too high, the dispersion adheres to the wall of a mixer in a large amount, and is difficult to extract from the mixer. As a result, it becomes difficult to obtain the dispersion in high volume.

In light of the foregoing, typical examples of the water-soluble organic solvent used in the present invention include polyhydric alcohols such as ethylene glycol, propylene glycol, 1,4-butandiol, and triethylene glycol, though the present invention is not limited thereto. An appropriate selection is made from among these alcohols in terms of, for example, the affinity for the hydrolysable polymer to be used. A plurality of the alcohols may be selected to prepare a mixed solvent.

For example, when a carboxylate salt such as sodium lactate is mixed with the hydrolysable polymer, the resultant mixture becomes extremely highly viscous, which makes it impossible to prepare the dispersion in high volume using a mixer. In order to reduce the viscosity, the mixture needs to be diluted with water, which then makes it impossible to suppress the hydrolysable polymer from being hydrolyzed during storage or transportation.

High volume organic solvent polymer dispersion:

In order for the polymer dispersion of the present invention formed of the hydrolysable polymer and the water-soluble organic solvent as described above to be prepared in high volume by homogeneous mixing using a mixer, the hydrolysable resin and the water-soluble organic solvent are used at an amount ratio that is set so as to allow the dispersion to have a viscosity (50 °C) such that the falling time measured by a Zahn cup with an orifice diameter of not more than 5 mm is 120 seconds or less. From the viewpoint of high volume preparation, the dispersion preferably has a lower viscosity. However, when the dispersion has a lower than necessary viscosity, it contains an excessively large amount of the organic solvent, which impairs the effect of the hydrolysable polymer, i.e., maintaining the anaerobic environment for a long term. On this account, it is desirable in the present invention to set the amount ratio between the hydrolysable resin and the water-soluble organic solvent so that the hydrolysable polymer and the organic solvent are contained in a well-balanced manner. A specific amount ratio cannot be defined definitely because it varies depending on the molecular weight and type of the hydrolysable polymer to be used as well as the type of the water-soluble organic solvent. It is usually preferable that a non-hygroscopic water-soluble organic solvent is contained in an amount of not less than 50 parts by mass, particularly not less than 100 parts by mass per 100 parts by mass of the hydrolysable polymer.

In view of industrial application, the above-described high volume organic solvent polymer dispersion has a high volume of not less than 500 L, preferably not less than 1, 000 L. When the volume is not less than this, it becomes difficult to extract the dispersion from the top of the mixer with a ladle or the like or to extract the dispersion by inverting the mixer itself. Accordingly, it is particularly useful that the viscosity is controlled within the low viscosity range.

Further, the high volume organic solvent polymer dispersion of the present invention needs to have a water content that is controlled to be not more than 30 mass%, preferably not more than 10 mass%, and more preferably not more than 1 mass% in order to prevent the hydrolysable polymer from being hydrolyzed before being injected into the ground. For this purpose, it is basically most suitable that the hydrophilic organic solvent is an anhydride. However, the organic solvent may contain a certain amount of moisture due to its hydrophilicity as long as the water content of the dispersion is within the aforementioned range. Further, the dispersion may be atmospherically exposed as long as the water content is maintained within the aforementioned range.

Since the high volume organic solvent polymer dispersion of the present invention contains the limited amount of water as described above, the hydrolysable polymer is suppressed from being hydrolyzed. For example, the retention rate of the weight average molecular weight (Mw) of the hydrolysable polymer left to stand at 50 °C for 30 days is not less than 70%, particularly not less than 80%.

Use of high volume organic solvent polymer dispersion

The above-described high volume organic solvent polymer dispersion of the present invention is particularly suitable for use in the purification of contaminated groundwater and is injected in situ into the soil in which contaminated groundwater is present.

The dispersion may be directly injected into the soil. Usually, however, the dispersion is diluted with water before being injected. This allows the dispersion to be injected into the ground immediately. The dispersion of the present invention is immediately and homogeneously diluted with water without being whipped, for example.

In the present invention, contaminants with which ground water to be purified is contaminated are not limited particularly. However, the present invention is effectively applied to volatile organic chlorine compounds (VOCs), nitrate nitrogen, nitrite nitrogen and the like which are regulated in line with the environmental quality standards for groundwater pollution.

Here, VOCs are chemical substances that are widely used for industrial purposes as a solvent and a detergent. Examples thereof include tetrachloroethylene, trichloroethylene, cis-1,2-dichloroethylene, 1,1-dichloroethylene, vinyl chloride, 1,1,1-trichloroethane, 1,1,2-trichloroethane, 1,2-dichloroethane, ethane tetrachloride, carbon tetrachloride, chloroform, and dichloromethane.

Nitrate nitrogen and nitrite nitrogen are mainly derived from nitrogen fertilizer, livestock excretion and domestic wastewater. A part of them is converted via ammoniacal nitrogen and then nitrite nitrogen to nitrate nitrogen in the end by the actions of microorganisms in the soil. Nitrate nitrogen and nitrite nitrogen are easily dissolved in water and less likely to be held in the soil, and thus are easily eluted in groundwater.

The polymer dispersion for purifying groundwater containing the aforementioned contaminants can be injected into the ground by a method known per se, such as the method disclosed in JP 2018-143918 A (Patent Document 2).

The high volume polymer dispersion of the present invention is not only suitable for being consumed in a massive amount by being fed underground but also available for use in the preparation of a fracturing fluid and the like in the field of drilling because the hydrolysable polymer exhibits moderate hydrolyzability.

Examples

Excellent effects of the present invention will be described by way of the following experimental examples.

<Raw materials>

<Organic solvent>

Ethylene glycol (EG):
Ethylene glycol (Guaranteed Reagent) manufactured by FUJIFILMWako Pure Chemical Corporation (purity: at least 99.5% (w/w) or more)
Triethylene glycol (TEG):

Triethylene glycol manufactured by Tokyo Chemical Industry Co., Ltd. (purity: more than 99.0%)

Propylene glycol (PG):

Propylene glycol (Guaranteed Reagent) manufactured by FUJIFILM Wako Pure Chemical Corporation (purity: at least 99.0% (w/w) or more)

Methanol:

Methanol manufactured by FUJIFILM Wako Pure Chemical Corporation (methanol content: 99.7%, for high-performance liquid chromatograph)

50% lactic acid aqueous solution:

Musashino Lactic Acid 50F manufactured by Musashino Chemical Laboratory, Ltd.

Sodium lactate (LaNa):

Sodium L-lactate solution (about 70%) manufactured by FUJIFILM Wako Pure Chemical Corporation; 16.7 g of pure water was added per 100 g of this solution.

<Hydrolysable polymer>

The hydrolysable polymer used was a low molecular weight product obtained by melt-kneading polylactic acid (PLA) and polyethylene oxalate (PEOx).

The PLA used was REVODE 101 manufactured by Zheijiang Hisun Biomaterials Co., Ltd. It had a molecular weight in a range of 120,000 < Mw < 170,000 when used as a raw material.

The PEOx used was a product obtained by polymerization which will be described in the following section. It had a reduced viscosity of 0.84 dL/g. A production method thereof will be described below.

<Synthesis of PEOx>

40 kg (339 mol) of dimethyl oxalate, 23.2 kg (374 mol) of ethylene glycol, 2.9 kg (32.2 mol) of 1, 4-butandiol, and 8.4 g of dibutyltin oxide were introduced into a 150 L capacity reactor that could be heated by a heating medium, which were then warmed in a current of nitrogen so that the liquid in the reactor reached 110°C, followed by normal pressure polymerization.

After methanol started being distilled away, the liquid was kept warm for one and a half hour so that a reaction proceeds. After a lapse of one and a half hour, the temperature of the liquid was increased to 130°C at a temperature increase rate of 10°C/hour and further to 190°C at a temperature increase rate of 20°C/hour. The liquid was recovered in an amount of 21.2 kg.

Thereafter, the liquid in a flask was subjected to reduced pressure polymerization at a temperature of 190°C and a pressure reduction degree of 0.1 to 0.8 kPa, and the thus-obtained polymer was extracted. This polymer was subjected to a heat treatment at 90°C for 2 hours and at 120°C for 2 hours.

<Melt-kneading of PLA and PEOx>

90 parts by mass of the PLA as a raw material and 10 parts by mass of the synthesized PEOx were quantitatively fed to a continuous twin screw extruder by respective quantitative feeders, followed by melt-kneading. The extruder had a temperature of 200°C. The melt-kneaded resin was formed into a spherical shape by an underwater cutter.

<Molecular weight reduction and crushing of hydrolysable polymer>

200 kg of the above-described melt-kneaded resin and 200 kg of the 50% lactic acid aqueous solution were introduced into a 1,000 L capacity reactor that could be heated by a heating medium, which were then stirred at 100°C for 2 hours to react with each other. After the reaction, the product was cooled to room temperature, followed by separating the resin from the solution by a centrifugal separator. The separated resin was washed with water and then dried under vacuum at 70°C to 90°C by a 300 L capacity conical dryer, thereby obtaining a low molecular weight hydrolysable polymer.

The thus-obtained resin was mechanically crushed into a fine powder ($D_{50}$ = 7μm) by a jet mill.

<Evaluation methods>

<Measurement of reduced viscosity of PEOx>

Apparatus: Cannon-Fenske viscometer

Solvent: 1,1,1,2,2,2-hexafluoro2-propanol
Temperature: 25°C

Sample preparation: 10 mL of the solvent was added to 40 mg of the sample, which were stirred gently at room temperature. After a visual confirmation that the sample was dissolved in the solvent, it was filtered through a 0.45 μm filter to prepare a measurement sample.

<Molecular weight measurement of hydrolysable polymer>

The molecular weight of the hydrolysable polymer was measured under the following conditions.

Apparatus: High-speed GPC apparatus HLC-8320 manufactured by Tosoh Corporation
Detector: Differential refractometer RI
Column: SuperMultipore HZ-M (2 columns)
Solvent: Chloroform
Flow rate: 0.5 mL/min
Column temperature: 40°C
Sample preparation: 3 mL of the solvent was added to about 10 mg of the powder sample. After a visual confirmation that the sample was dissolved in the solvent, it was filtered through a 0.45 μm filter to prepare a measurement sample. Polystyrene was used as a standard.

<Measurement of molecular weight retention rate>

About 10 g of the hydrolysable polymer dispersion prepared in each Example was put in a 20 mL capacity glass vial container, which was then closed with a PP stopper and left to stand still in an oven set at 50°C. In 30 days, 2 mL of the dispersion was extracted and centrifuged at 10,000 rpm for 2
minutes, thereby separating the fine powder from the solvent. The fine powder was centrifuged in a like manner with pure water to be washed and then dried under vacuum at 40°C for 4 hours, thereby obtaining a powder sample. The thus-obtained powder sample was subjected to GPC measurement, thereby evaluating the molecular weight.
The molecular weight retention rate $X_{keep}$ was calculated by Equation (1) below using the molecular weight obtained by the GPC measurement.

$$X_{keep} = M_{Wfinish} / M_{Winitial}$$

$X_{keep}$: Molecular weight retention rate
$M_{Wfinish}$: Weight average molecular weight of hydrolysable polymer left to stand at 50°C for 30 days
$M_{Winitial}$: Weight average molecular weight of freshly prepared hydrolysable polymer

<Measurement of water content ratio>

The water content ratio W of the organic solvent polymer dispersion was calculated by Equation (2) below using the water content ratios of the organic solvent and the powder which were measured respectively.

$$W = X_{solvent} \times W_{solvent} + X_{powder} \times W_{powder} \cdots (2)$$

W: Water content ratio (%) of organic solvent polymer dispersion
$X_{solvent}$: Mass fraction of solvent in organic solvent polymer dispersion
$W_{solvent}$: Water content ratio (%) of solvent
$X_{powder}$: Mass fraction of powder in organic solvent polymer dispersion
$W_{powder}$: Water content ratio (%) of powder

The water content ratio of the solvent was measured under the following conditions, and the water content ratio of the hydrolysable polymer was measured.
Apparatus: Moisture meter (volumetric titration method) KF-31 manufactured by Mitsubishi Chemical Analytech, Co., Ltd. Titration solvent: AQUAMICRON SS-Z 3 mg
Sample preparation: A commercially available reagent was subjected to measurement immediately after opening.

The water content ratio of the powder was measured by using the following apparatus, and the water content ratio of the hydrolysable polymer was measured.

Apparatus: Trace moisture meter CA-200 manufactured by Mitsubishi Chemical Analytech, Co., Ltd.

<Measurement of viscosity>

Apparatus: Zahn cup #4 (orifice diameter: 4.4 mm) manufactured by BEVS Industrial Co., Ltd.

Sample preparation: The prepared hydrolysable polymer dispersion was left to stand overnight in a room kept at 50 °C, and then the falling time was measured by using the Zahn cup in the same room.

Measuring method: The Zahn cup was dipped into the hydrolysable polymer dispersion and then lifted to a height where the bottom is about 5 cm away from the liquid surface. The time from when the Zahn cup was lifted until when the entire hydrolysable polymer dispersion in the Zahn cup fell and the liquid streaming from the bottom broke up was measured as an evaluation value.

Evaluation method: When the evaluation value of this measurement is less than 120 seconds, the hydrolysable polymer dispersion can be extracted suitably through a discharge pipe even when produced by a high volume mixer.

(Example 1)

100 g of the hydrolysable polymer and 200 g of the EG were put in a 600 mL capacity plastic cup container, followed by stirring at 20, 000 rpm for 3 minutes by a high speed stirrer (HSIANGTAI ST-200 manufactured by AS ONE Corporation), thereby obtaining a hydrolysable polymer dispersion.

(Example 2)

A hydrolysable polymer dispersion was obtained in the same manner as in Example 1 except that the EG was replaced with the TEG.

(Example 3)

A hydrolysable polymer dispersion was obtained in the same manner as in Example 1 except that the EG was replaced with the PG.

(Example 4)

30 g of the hydrolysable polymer and 300 g of the PG were put in a 600 mL capacity plastic cup container, followed by the same treatment as in Example 1, thereby obtaining a hydrolysable polymer dispersion.

(Comparative Example 1)

A hydrolysable polymer dispersion was obtained in the same manner as in Example 1 except that the EG was replaced with water.

(Comparative Example 2)

A hydrolysable polymer dispersion was obtained in the same manner as in Example 1 except that the EG was replaced with methanol.

(Comparative Example 3)

A hydrolysable polymer dispersion was obtained in the same manner as in Example 1 except that the EG was replaced with the LaNa.

<Physical properties of hydrolysable polymer dispersion>

Physical properties of each of the hydrolysable polymer dispersions prepared as described above were measured; the results are shown in Table 1.

In Examples 1 to 4, the falling time at 50 °C measured by a Zahn cup was suitable, and the molecular weight retention rate was as high as not less than 80%. This proves that the polymer dispersion obtained in the present invention is easy to extract from a mixer and pack even when prepared in high volume, and the hydrolysable polymer can be effectively prevented from being deteriorated even in long term storage.

[Table 1]

|  | Solvent | Water content ratio (%) | Powder: solvent ratio | Zahn cup falling time (sec.) | Molecular weight retention rate |
|---|---|---|---|---|---|
| Example 1 | EG | 0.066 | 1 :2 | 37.0 | 96% |
| Example 2 | TEG | 0.022 | 1 : 2 | 21.3 | 94% |
| Example 3 | PG | 0.047 | 1 : 2 | 49.2 | 85% |
| Example 4 | PG | 0.057 | 1 : 10 | 6.5 | 95% |
| Comparative Example 1 | Water | Not measured | 1 : 2 | No falling | 20% |
| Comparative Example 2 | Methanol | 0.014 | 1 : 2 | 5.8 | 60% |
| Comparative Example 3 | LaNa | 26.387 | 1 : 2 | No falling | 27% |

**Claims**

1. A high volume organic solvent polymer dispersion that is prepared by dispersing a hydrolysable polymer in a non-volatile water-soluble organic solvent, has a water content of not more than 30 mass%, and has a falling time at 50 °C of not more than 180 seconds which is measured by a Zahn cup with an orifice diameter of not more than 5 mm.

2. The high volume organic solvent polymer dispersion according to claim 1 having a volume of not less than 1, 000 L.

3. The high volume organic solvent polymer dispersion according to claim 1, wherein the water-soluble organic solvent is a polyhydric alcohol.

4. The high volume organic solvent polymer dispersion according to claim 1, wherein the hydrolysable polymer is an aliphatic polyester.

5. The high volume organic solvent polymer dispersion according to claim 4, wherein the aliphatic polyester is polylactic acid or polyoxalate.

6. The high volume organic solvent polymer dispersion according to claim 1, wherein a weight average molecular weight retention rate of the hydrolysable polymer left to stand at 50 °C for 30 days is maintained at not less than 80%.

7. A method of using a high volume organic solvent polymer dispersion comprising feeding a high volume organic solvent polymer dispersion according to claim 1 into the ground.

8. The method of using according to claim 7, wherein the high volume organic solvent polymer dispersion is injected into the soil to purify contaminated groundwater.

**INTERNATIONAL SEARCH REPORT**

| International application No. |
|---|
| PCT/JP2020/006723 |

### A. CLASSIFICATION OF SUBJECT MATTER
Int. Cl. B09C1/10(2006.01)i, C08K5/053(2006.01)i, C08L67/02(2006.01)i,
C08L67/04(2006.01)i, C08L101/02(2006.01)i, C08L101/16(2006.01)n
FI: C08L101/02, C08L67/02, C08K5/053, B09C1/10, B09B3/00 E, C08L67/04 ZBP, C08L101/16

According to International Patent Classification (IPC) or to both national classification and IPC

### B. FIELDS SEARCHED

Minimum documentation searched (classification system followed by classification symbols)
Int. Cl. B09C1/10, C08K5/053, C08L67/02, C08L67/04, C08L101/02, C08L101/16

Documentation searched other than minimum documentation to the extent that such documents are included in the fields searched
Published examined utility model applications of Japan 1922-1996
Published unexamined utility model applications of Japan 1971-2020
Registered utility model specifications of Japan 1996-2020
Published registered utility model applications of Japan 1994-2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2005-81158 A (MATSUSHITA ELECTRIC INDUSTRIAL CO., LTD.) 31 March 2005, claims, paragraphs [0011], [0012], [0021], example 3 | 1-8 |
| A | JP 2006-218456 A (KOKUSAI KOGYO CO., LTD.) 24 August 2006, claims, paragraphs [0019]-[0024], examples | 1-8 |
| A | JP 8-245877 A (SEKISUI PLASTICS CO., LTD.) 24 September 1996, claims, paragraphs [0017]-[0020], example 8 | 1-8 |

☐ Further documents are listed in the continuation of Box C.  ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08.05.2020 | 19.05.2020 |

| Name and mailing address of the ISA/<br>Japan Patent Office<br>3-4-3, Kasumigaseki, Chiyoda-ku,<br>Tokyo 100-8915, Japan | Authorized officer |
|---|---|
| | Telephone No. |

Form PCT/ISA/210 (second sheet) (January 2015)

**INTERNATIONAL SEARCH REPORT**
Information on patent family members

International application No.

PCT/JP2020/006723

| Patent Documents referred to in the Report | Publication Date | Patent Family | Publication Date |
|---|---|---|---|
| JP 2005-81158 A | 31.03.2005 | (Family: none) | |
| JP 2006-218456 A | 24.08.2006 | (Family: none) | |
| JP 8-245877 A | 24.09.1996 | US 5854376 A<br>claims, column 3,<br>lines 8-39, examples<br>13-14<br>EP 731127 A2 | |

Form PCT/ISA/210 (patent family annex) (January 2015)

**EP 3 970 871 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3694294 B

- JP 2018143918 A